# EUROPEAN PATENT SPECIFICATION

(11) **EP 1 157 067 B1**
(45) Date of publication and mention of the grant of the patent: **03.03.2004**
(21) Application number: 99959965.7
(22) Date of filing: 08.12.1999
(51) Int. Cl.: C08L 23/10, C08L 23/12, C08J 3/28, H01M 2/16

(54) **SEPARATOR FOR SECONDARY BATTERY AND POROUS FILM MADE OF POLYOLEFIN BLEND AND PROCESS FOR PREPARING THE SAME**
TRENNMITTEL FÜR SEKUNDÄRBATTERIE UND PORÖSER FILM AUS EINER POLYOLEFINMISCHUNG SOWIE IHR HERSTELLUNGSVERFAHREN
ISOLATEUR POUR ACCUMULATEURS SECONDAIRES ET FILM POREUX CONSTITUE D'UN MELANGE POLYOLEFINIQUE ET PROCEDE DE FABRICATION ASSOCIE

(30) Priority: 08.12.1998 KR 9853667
(43) Date of publication of application: 28.11.2001
(73) Proprietor: LG Chemical Co. Ltd, Seoul 150-721 (KR)
(72) Inventor: LEE, Sang-Young, LG Chemical Apt. 5-105, Yuseong-gu, Taejeon-city 305-340 (KR); AHN, Byeong-In, Yuseong-gu, Taejeon-city 305-340 (KR); SONG, Heon-Sik, Yuseong-gu, Taejeon-city 305-340 (KR); KIM, Myung-Man, Seo-gu, Taejeon-city 302-105 (KR)
(74) Representative: Weber, Thomas, Dr.Dipl.-Chem.
(86) International application number: PCT/KR1999/000750
(87) International publication number: WO 2000/034384

(56) References cited:
- WO-A-98/26429
- WO-A-98/49225
- US-A- 3 839 516
- US-A- 4 438 185
- US-A- 5 385 777
- US-A- 5 480 745

## Description

### BACKGROUND OF THE INVENTION

### (a) Field of the Invention

The present invention relates to a porous film made of a polyolefin blend, a process for manufacturing the same, and a separator for a secondary battery.

### (b) Description of the Related Art

A battery separator basically separates the anode from the cathode, prevents a fused junction short circuit of the two electrodes, and at the same time allows the passage of an electrolyte or ions.

Although the material of a battery separator itself is inert and does not influence electrical energy storage or output, its physical properties greatly influence on the function and safety of a battery. Furthermore, even though multiple varieties of separators are currently used according to the various chemical systems and types of batteries in the field, research is still under way since special lithium secondary batteries require a separator that has different characteristics from those of separators used in the different types of conventional batteries.

The basic characteristics required in a battery separator include the provision of physical separation between the anode and the cathode, low electrical resistance for facilitating the passage of electrolyte or ions, outstanding electrolyte wettability, mechanical strength required for the battery assembly and application, minimal separator thickness for high charging density, etc.

Particularly, the separator wettability on electrolyte directly and greatly influences productivity during battery assembly. That is, as a jelly roll is assembled by rolling up an anode, cathode, and separator and then being put into a can in which electrolyte is added, it is important that the separator wettability should be good so that electrolyte can permeate into a tightly rolled jelly roll. Therefore, increasing the permeation rate of an electrolyte by providing a hydrophilic property to a hydrophobic separator is an important issue in the battery field.

Besides the above basic characteristics, when the separator during battery assembly directly contacts the anode or the cathode which may have a rough surface, or when dendrites are formed inside a battery as the battery undergoes repeated charges and discharges in practical battery applications, scars may be formed on the separator that can result in a short circuit. The puncture strength of a separator should be sufficiently high to prevent this from occurring.

The safety of a separator, a distinct characteristic from the above basic characteristics of a battery separator, is quite necessary since this feature allows the battery circuit to be interrupted by the closure of the separator's micropores when a large amount of current flows suddenly, as during an external short circuit.

This battery circuit interruption phenomenon caused by the closure of separator micropores is called 'separator shut down'. Furthermore, the separator's resistance to melt down during a temperature rise after the closure of the micropores is also very important.

Current should become zero after a separator shut down is completed. However, this rarely happens and it is difficult to perform a shut down and control a temperature increase simultaneously since the temperature steadily increases to a certain degree even after the start of a separator shut down. When a separator loses its shape too early, direct electrode fusion can occur, which is extremely dangerous. Therefore, it is quite important to always maintain the separator shape above the melt temperature.

The separator material is a factor influencing separator safety features such as the shut down characteristics and resistance to melt down. Although polyethylene, which has a low melting point, is chiefly used in the current lithium ion batteries since its early shut down feature makes it easy to restrain the temperature increase related to the closure of the micropores, it has a disadvantage of having poor mechanical properties.

However, polyethylene is sometimes used together with polypropylene depending on the desired separator shut down characteristics, resistance to melt down, and mechanical properties.

A method for manufacturing a lithium ion battery separator by laminating polyethylene and polypropylene is disclosed in European Patent Nos. 715,364, 718,901, and 723,304, U.S.A. Patent Nos. 5,240,655, 5,342,695, and 5,472,792, and Japanese Laid-open Patent No. Heisei 4-181651, etc.

However, this method has disadvantages in that it is difficult to make a thin separator, the processing technology is delicate, and the polyethylene layer is easily delaminated from the polypropylene layer due to weak adhesion between the layers.

Additionally, a method for manufacturing a microporous membrane using a polyethylene and polypropylene blend base was introduced in U.S.A. Patent Nos. 5,385,777 and 5,480,745. However, the usefulness of this method is obviously insufficient since this method has not been commercialized, and the associated wettability is also relatively poor.

Methods for manufacturing a porous film using polyolefin are mainly divided into a dry type method and wet type method, from which monoaxial and biaxial methods are known for the stretching processes related to the formation of numerous micropores.

Although there are many processes that can be used theoretically or in a laboratory, the commercially available microporous films for a separator are those produced with the wet type method using filler or wax and solvent, and those from the dry type method not using a solvent. The wet type method is relatively well known to result in the outstanding puncture strength of the battery separator.

In practice, when microporous films are manufactured using the various types of polyolefin, the resulting shut down initiation temperature of polyethylene is outstanding at 130°C, while the mechanical strength is inferior. On the other hand, polypropylene has outstanding mechanical strength while it exhibits safety problems since the shut down initiation temperature is over 160°C.

### SUMMARY OF THE INVENTION

Accordingly, the present invention provides a method for manufacturing a microporous film having outstanding shut down and mechanical characteristics by blending polyolefin and applying the same to a secondary battery separator in order to ameliorate the above problems.

Furthermore, although these polyolefins are blended so as to be manufactured into a microporous film, their wettabilities in a battery electrolyte are low since they are hydrophobic. Therefore, the surface of a microporous film is treated to improve wettability in the present invention.

Additionally, of the methods for manufacturing a porous film, the dry type method out is a simple process in which a solvent is not used. However, the dry type method results in a battery separator with relatively inferior puncture strength. However, the present invention utilizes the dry type method to manufacture a microporous film having outstanding puncture strength.

It is an object of the present invention to provide a microporous film made of polyolefin blend having outstanding electrolyte wettability, puncture strength, and shut down characteristics, and a method for manufacturing the same, and for applying a microporous film to a secondary battery separator.

It is other object of the present invention to improve shut down characteristics by manufacturing a battery separator with a blend of polyethylene and polypropylene, to improve the wettability of a film of a hydrophobic material by irradiating its surface with ionizing radiation, and to improve the puncture strength of a microporous film manufactured with the dry type method.

### DETAILED DESCRIPTION OF THE PREFERRED EMBODIMENTS

In the following detailed description, only the preferred embodiments of the invention have been shown and described, simply by way of illustration of the best mode contemplated by the inventor(s) of carrying out the invention. As will be realized, the invention is capable of modification in various obvious respects, all without departing from the invention. Accordingly, the description is to be regarded as illustrative in nature, and not restrictive.

The present invention provides a microporous film characterized in that its manufacturing processes comprise the steps of molding a film with a blend containing two or more polyolefins by using a casting or by film blowing, manufacturing a microporous film by annealing or stretching the molded film, and surface treating, i.e., irradiating the film with ionizing radiation before or after the pore formation.

Furthermore, a microporous film manufactured by the above manufacturing method is applied in the present invention to a separator that separates the anode and the cathode of a lithium ion secondary battery or an alkali secondary battery.

Polyethylene in the present invention includes low density polyethylene (LDPE), linear low density polyethylene (LLDPE), high density polyethylene (HDPE), etc., wherein the resins have a melt index of from 0.05 to 60 g/(10 minutes), and that of polypropylene is from 0.5 to 20 g/(10 minutes).

The mixed blend of the present invention comprises a mixture of polypropylene having a high melting point and polyethylene having a low melting point with a mixed weight ratio ranging from 1:9 to 9:1. Furthermore, an appropriate amount of additives can be put into the mixed blend in order to improve the function of the separator. These additives include antioxidants, plasticizers, flame retardants, colorants, compatibilizers, etc.

The blending of polypropylene, polyethylene, and necessary additives is carried out using appropriate compounding machines such as a banbary or a twin screw extruder, etc.

This obtained mixed blend can be molded into films using the general film molding methods of thermoplastic resins such as casting or film blowing.

Although there is not any special limit for the film molding, a lower processing temperature is preferable, the draw ratio is usually over 20, and the take-up speed is preferably 10 to 100 meters/minute, wherein the draw ratio is a value dividing a winding speed by a linear speed of resins in a die.

The annealing is performed to increase the degree of crystallization and the elasticity recovery ratio to over 50%. The annealing can use a method in which a film is adhered on a heated metal plate, a method in which a film is heated in an oven, a method in which a film is heated by infrared ray irradiation by winding or unwinding a film on a roll inside or outside an oven, or a method in which a roll is double wound with a film such as polyethyleneterephthalate and the roll is heated in an oven, etc. An annealing temperature is set from a temperature that is about 50°C lower than a melting point of a film to the melting point, or can be adjusted by varying the temperature in stages. An annealing time of over 30 seconds is beneficial. When an annealing time is less that 10 seconds, the elasticity recovery ratio increase is insignificant since the annealing of the film is not sufficient.

A film obtained from this annealing process can be manufactured into a microporous film having micropores through a stretching process using the following two methods.

First, after a film is monoaxially or biaxially stretched 10 to 120% of the precursor film while at a temperature in the range of the glass transition temperature of the film to a temperature of 45 °C lower than the melting point of polyethylene having the lowest melting point, it is then stretched 50 to 170% of the precursor film while increasing the temperature within the range from a temperature of 45°C lower than the melting point of polyethylene to the melting point temperature of polypropylene.

After the stretching is finished, the temperature is fixed at a value of 5°C or more lower than the melting point of the polypropylene film while the film is maintained in a state under which tension is applied, and may it be contracted up to 5 to 100% of the precursor film.

The film surface treatment is done by irradiation with ionizing radiation either before or after the above annealing process and in the middle or after the stretching process.

The present invention uses ion beams wherein, one or more of the energized ion particles are selected from a group consisting of electrons, hydrogen, oxygen, helium, fluorine, neon, argon, krypton, air, and N₂O.

Furthermore, when the ionizing radiation is irradiated while infusing a reactive gas, one or more of the reactive gases are selected from a group consisting of hydrogen, oxygen, nitrogen, ammonia, carbon monoxide, carbon dioxide, carbon tetrafluoride, methane, and N₂O.

Not only ion beams, but also gamma rays, plasma, electron beams, etc. can be used in the irradiation of the ionizing radiation.

The above mentioned processes describes the total process for manufacturing a separator having the optimum physical properties wherein, part of the steps can be omitted or additional steps can be added according to the desired final physical properties. The following physical properties of a microporous film manufactured using the above method have been measured:
1) Thickness,
2) Air permeability: JIS P 8117,
3) Porosity: American Society for Testing and Materials (ASTM) D2873,
4) Pore size: Mercury porosimeter,
5) Tensile strength and tensile modulus: ASTM D882,
6) Puncture strength,
7) Shut-down temperature,
8) Melting temperature,
9) Wettability: a relative ratio of permeation based on a mixture of ethylene carbonate containing 1 mole of LiPF₆ and dimethyl carbonate.

### EXAMPLES

### EXAMPLE 1

After mixing in a twin screw extruder a blend comprising 70 wt% of polypropylene having a melt index of 2.0 g/(10 minute) and a melting point of 164°C and 30 wt% of polyethylene having a melt index of 3.0 g/(10 minute) and a melting point of 128°C, a precursor film was manufactured using a T-die attached single screw extruder and a winding device. The applied extrusion temperature was 200°C and the draw ratio was 132.

This manufactured precursor film was annealed at a temperature of 110°C in a drying oven for 10 minutes.

The above film was monoaxially stretched achieving a stretching ratio of 60% of the precursor film length at room temperature by the roll stretching method.

After finishing the stretching at room temperature, the film again was stretched to 180% of the precursor film length using an annealing roll at a temperature of 80 °C.

After completing this stretching, heat was applied to the film for 2 minutes while under a state of tension provided by using an annealing roll set at 100°C, and it then was cooled to manufacture a microporous film.

After putting this obtained microporous film into a vacuum chamber in which a vacuum of 10⁻⁵ to 10⁻⁶ torr was maintained, argon ion particles (Ar⁺) were irradiated on both sides of the film by an ion gun. The ion beam energy and ion irradiation amount were 2 keV, and 10¹⁸ ions/cm², respectively.

The physical properties of the resulting microporous membrane are represented in Table 1.

### EXAMPLE 2

A precursor film was manufactured by the same method as EXAMPLE 1, and annealing was performed on this precursor film in a drying oven at a temperature of 75°C for 15 minutes.

After surface treating this film by an ion irradiation method having the same condition as in EXAMPLE 1, the film was stretched at a room temperature and a high temperature by a stretching method having the same conditions as in EXAMPLE 1 to obtain a microporous film.

The physical properties of the resulting microporous membrane are represented in Table 1.

### EXAMPLE 3

After manufacturing a precursor film by the same method as in EXAMPLE 1, this precursor film was put into a vacuum chamber in which a vacuum of 10⁻⁵ to 10⁻⁶ torr was maintained, and the film was surface treated by irradiating argon ion particles (Ar⁺) on both sides of this film by an ion gun. The ion beam energy and ion irradiation amount were 2 keV, and 10¹² ions/cm², respectively.

After annealing was performed on this obtained film in a drying oven for 15 minutes at 75°C as in EXAMPLE 2, the film was stretched at a room temperature and a high temperature by a stretching method having the same conditions as in EXAMPLE 1 to obtain a microporous film.

The physical properties of the resulting microporous membrane are represented in Table 1.

### EXAMPLE 4

After mixing a blend comprising 45 wt% of polypropylene having a melt index of 2.0 g/(10 minute) and a melting point of 164°C and 55 wt% of polyethylene having a melt index of 1.0 g/(10 minute) and a melting point of 134°C in a twin screw extruder, a precursor film was manufactured using a T-die attached single screw extruder and winding device. The applied extrusion temperature was 210°C and the draw ratio was 170.

This manufactured precursor film was annealed at a temperature of 90°C in a drying oven for 1 minute.

The above film was monoaxially stretched to a stretching ratio of 30% of the precursor film length at room temperature by the roll stretching method.

After finishing the stretching at room temperature, the film again was stretched to 180% of the precursor film using an annealing roll at a temperature of 100°C.

After completing this stretching, heat was applied to the film for 1 minute under a state of tension provided by using an annealing roll fixed at 100°C, and the film was again contracted 60% of the precursor film length, and cooled in order to manufacture a microporous film.

After putting this obtained microporous film into a vacuum chamber in which a vacuum of 10⁻⁵ to 10⁻⁶ torr was maintained, the film was surface treated by infusing a reactive gas of O₂ into and around the film at a rate of 4 mℓ/min and by irradiating hydrogen ion particles (H₂⁺) on both sides of this film with an ion gun. The ion beam energy and ion irradiation amount were 0.3 keV, and 10¹⁸ ions/cm², respectively.

The physical properties of the resulting microporous membrane are represented in Table 1.

### EXAMPLE 5

After manufacturing a precursor film by the same method as in EXAMPLE 4, annealing was carried out on this precursor film in a drying oven at a temperature of 80°C for 15 minutes.

After surface treating this film by using an ion irradiating method having the same conditions as in EXAMPLE 4 except for using a reactive gas of CO₂, the film was stretched at room temperature and a high temperature by a stretching method having the same conditions as in EXAMPLE 4 to obtain a microporous film.

The physical properties of the resulting microporous membrane are represented in Table 1.

### EXAMPLE 6

After manufacturing a precursor film by the same method as in EXAMPLE 4, this precursor film was put into a vacuum chamber in which a vacuum of 10⁻⁵ to 10⁻⁶ torr was maintained, and the film was surface treated by infusing a reactive gas of O₂ into and around the film at a rate of 4 mℓ/min and irradiating hydrogen ion particles (H₂⁺) on both sides of this film with an ion gun. The ion beam energy and ion irradiation amount were 0.3 keV, and 10¹⁵ ions/cm², respectively.

After annealing was performed on this obtained film in a drying oven for 1 minute at 90°C in conditions as in EXAMPLE 4, the film was stretched at a room temperature and a high temperature by a stretching method having the same conditions as in EXAMPLE 1 to obtain a microporous film.

The physical properties of the resulting microporous membrane are represented in Table 1.

### EXAMPLE 7

After mixing a blend comprising 60 wt% of polypropylene having a melt index of 1.0 g/(10 minute) and a melting point of 161°C and 40 wt% of polyethylene having a melt index of 0.5 g/(10 minute) and a melting point of 125°C in a twin screw extruder, a precursor film was manufactured using a T-die attached single screw extruder and winding device. The applied extrusion temperature was 237°C and the draw ratio was 85.

This manufactured precursor film was annealed at a temperature of 120°C in a drying oven for 1 minute.

The above film was monoaxially stretched to a stretching ratio of 55% of the precursor film length at a temperature of 60°C by the roll stretching method.

After finishing the stretching, the film again was stretched to 145% of the precursor film using an annealing roll at a temperature of 110°C.

After completing this stretching, a microporous film was manufactured by cooling the film after applying heat for 5 minutes with 50% of the precursor film contracted under a state of tension given while using an annealing roll set at 150°C.

Gamma (γ) rays were irradiated on this obtained microporous film in an air atmosphere. The dose of irradiation was 1.5 Mrad.

The physical properties of the resulting microporous membrane are represented in Table 1.

### COMPARATIVE EXAMPLE 1

After manufacturing a precursor film by the same method as in EXAMPLE 1, annealing was performed on this precursor film in a drying oven at a temperature of 65°C for 10 minutes. This film was stretched at a room temperature and a high temperature by a stretching method having the same conditions as in EXAMPLE 1 to obtain a microporous film.

The physical properties of the resulting microporous membrane are represented in Table 1.

### COMPARATIVE EXAMPLE 2

After manufacturing a precursor film by the same method as in EXAMPLE 4, annealing was performed on this precursor film in a drying oven at a temperature of 105°C for 1 minute. This film was stretched at a room temperature and a high temperature by a stretching method having the same conditions as in EXAMPLE 4 to obtain a microporous film.

The physical properties of the resulting microporous membrane are represented in Table 1.

### COMPARATIVE EXAMPLE 3

A precursor film was manufactured with polypropylene having a melt index of 2.0 g/(10 minute) and a melting point of 164°C using a T-die attached single screw extruder and winding device. The applied extrusion temperature was 230°C and the draw ratio was 120.

This manufactured precursor film was annealed at a temperature of 140°C in a drying oven for 3 minutes.

This film was monoaxially stretched to a stretching ratio of 70% of the precursor film length at a temperature of 50°C by the roll stretching method.

After finishing the stretching, the film was again stretched to 140% of the precursor film using an annealing roll at a temperature of 130°C.

After completing this stretching, heat was applied on the film for 5 minutes under a state of tension given by using an annealing roll set at 150°C, and it was then cooled to manufacture a microporous film.

After putting this obtained microporous film into a vacuum chamber in which a vacuum of 10⁻⁵ to 10⁻⁶ torr was maintained, the film was surface treated by irradiating argon ion particles (Ar⁺) on both sides of this film with an ion gun. The ion beam energy and ion irradiation amount were 0.6 keV, and 10¹⁷ ions/cm², respectively.

The physical properties of the resulting microporous membrane are represented in Table 1.

### COMPARATIVE EXAMPLE 4

A precursor film was manufactured with polyethylene having a melt index of 3.0 g/(10 minute) and a melting point of 128°C using a T-die attached single screw extruder and winding device. The applied extrusion temperature was 200°C and the draw ratio was 155.

This manufactured precursor film was annealed at a temperature of 100°C in a drying oven for 15 minutes.

This film was monoaxially stretched to a stretching ratio of 30% of the precursor film length at a temperature of 0°C by the roll stretching method.

After finishing the stretching, the film again was stretched to 170% of the precursor film length using an annealing roll at a temperature of 100°C.

After completing this stretching, heat was applied on the film for 5 minutes while it was in a state of tension provided by using an annealing roll set at 110°C, and it was then cooled to manufacture a microporous film.

After putting this obtained microporous film into a vacuum chamber in which a vacuum of 10⁻⁴ to 10⁻⁵ torr was maintained, the film was surface treated by infusing a reactive gas of N₂ into and around the film at a rate of 8 mℓ/min and by irradiating argon ion particles (Ar⁺) on both sides of this film with an ion gun. The ion beam energy and the amount of ion irradiation were 1.0 keV, and 10¹⁵ ions/cm², respectively.

The physical properties of the resulting microporous membrane are represented in Table 1.

**Table 1**

| Classification | EX 1 | EX 2 | EX 3 | EX 4 | EX 5 | EX 6 | EX 7 | COM EX 1 | COM EX 2 | COM EX 3 | COM EX 4 |
|---|---|---|---|---|---|---|---|---|---|---|---|
| Film Thickness(µm) | 25 | 25 | 25 | 25 | 25 | 25 | 27 | 25 | 25 | 27 | 25 |
| Pore size (µm) | 0.05 | 0.04 | 0.04 | 0.06 | 0.05 | 0.05 | 0.04 | 0.04 | 0.05 | 0.03 | 0.07 |
| Porosity (%) | 39 | 36 | 36 | 41 | 37 | 36 | 38 | 36 | 35 | 40 | 44 |
| Air permeability | 580 | 670 | 650 | 600 | 750 | 740 | 840 | 660 | 735 | 630 | 490 |
| (sec/100cc) | | | | | | | | | | | |
| Puncture strength(g) | 460 | 455 | 470 | 430 | 410 | 460 | 510 | 410 | 375 | 480 | 310 |
| Tensile strength | 1650 | 1480 | 1610 | 1520 | 1390 | 1490 | 1710 | 1300 | 1150 | 1800 | 1160 |
| (kgf/cm2) | | | | | | | | | | | |
| Tensile modulus | 9800 | 9300 | 9500 | 8600 | 8100 | 8400 | 11200 | 8100 | 6400 | 10800 | 8400 |
| (kgf/cm2) | | | | | | | | | | | |
| Shut-down | 142 | 141 | 142 | 134 | 133 | 135 | 136 | 141 | 134 | 165 | 130 |
| Temperature (°C) | | | | | | | | | | | |
| Melting | 176 | 170 | 169 | 164 | 164 | 164 | 172 | 169 | 161 | 168 | 134 |
| Temperature(°C) | | | | | | | | | | | |
| Wettability | ⓞ | ⓞ | ⓞ | ⓞ | ⓞ | ⓞ | ⓞ | Δ | ○ | Δ | ○ |
| EC/DMC ratio = 4/6 | | | | | | | | | | | |
| Wettability | ⓞ | ○ | ○ | ⓞ | ○ | ○ | ○ | X | Δ | X | Δ |
| EC/DMC ratio = 5/5 | | | | | | | | | | | |
| Wettability EC/DMC ratio = 6/4 | ○ | Δ | Δ | ⓞ | Δ | Δ | Δ | X | X | X | X |
| Wettability | Δ | X | X | ○ | X | X | X | X | X | X | X |
| EC/DMC ratio = 7/3 | | | | | | | | | | | |
| ⓞ: wettability is very good; | | | | | | | | | | | |
| ○ : wettability is good; | | | | | | | | | | | |
| Δ: wettability is fair; | | | | | | | | | | | |
| X: wettability is bad. | | | | | | | | | | | |

A microporous film made of polyolefin blend manufactured by the present invention has outstanding electrolyte wettability, puncture strength, and shut down characteristics, and the thickness of a separator can be further reduced since the film is molded into a single layer by a blend.

Furthermore, secondary batteries in which this microporous film is applied as a separator, especially lithium ion secondary batteries or alkali secondary batteries, are safe due to outstanding puncture strength, shut down characteristics, and separator melting resistance during large external electric current flows. Furthermore, the manufacture of such batteries can achieve a high degree of productivity during the battery assembly due to the excellent separator electrolyte wettability. Additionally, such microporous film applied as a separator can make high charging density possible due to the thin thickness and high mechanical strength of such a separator.

## Claims

1. A microporous film manufactured by a process comprising the steps of :
a) molding a film with a mixed blend containing two or more of polyolefins by using a casting or film blowing;
b) manufacturing a microporous film by annealing and stretching the molded film; and
c) treating the surface of film by irradiation with ionizing radiation either before or after the pore formation.

2. A microporous film in accordance with claim 1, wherein the mixed blend comprises two or more of polyolefin mixtures having a melting point difference of over 10°C.

3. A microporous film in accordance with claim 1, wherein the mixed blend comprises a mixture in which polypropylene having a high melting point and polyethylene having a low melting point are mixed in a weight ratio ranging from 1:9 to 9:1.

4. A microporous film in accordance with claim 1, wherein the surface treatment of irradiation with ionizing radiation is performed on one side or on both sides of the film.

5. A microporous film in accordance with claim 1, wherein the surface treatment irradiation with ionizing radiation improves the hydrophilicity and/or mechanical properties of the film by irradiating energized ion particles on the film under a vacuum.

6. A microporous film in accordance with claim 1, wherein the surface treatment irradiation with ionizing radiation improves the hydrophilicity and/or mechanical properties of the film by the infusion of a reactive gas under a vacuum state by means of irradiating energized ion particles on the film.

7. A microporous film in accordance with claim 5 or claim 6, wherein one or more of ion particles are selected from a group consisting of electrons, hydrogen, oxygen, helium, fluorine, neon, argon, krypton, air, and N₂O.

8. A microporous film in accordance with claim 6, wherein one or more of reactive gases are selected from a group consisting of hydrogen, oxygen, nitrogen, ammonia, carbon monoxide, carbon dioxide, carbon tetrafluoride, methane, and N₂O.

9. A microporous film in accordance with claim 1, wherein the ionizing radiation is selected from a group consisting of ions, gamma (γ) rays, plasma, and electron beams.

10. A method for manufacturing a microporous film manufactured by a process comprising the steps of:
a) molding a film with a mixed blend containing two or more of polyolefins by using a T-die extruder or film blowing;
b) manufacturing a microporous film by annealing and stretching the molded film; and
c) treating the surface of film by irradiation with ionizing radiation before or after the pore formation.

11. A method for manufacturing a microporous film in accordance with claim 10, wherein the mixed blend comprises two or more of polyolefin mixtures having a melting point difference of over 10°C.

12. A method for manufacturing a microporous film in accordance with claim 10, wherein the mixed blend comprises a mixture in which polypropylene having a high melting point and polyethylene having a low melting point are mixed in a weight ratio ranging from 1:9 to 9:1.

13. A method for manufacturing a microporous film in accordance with claim 10, wherein the surface treatment of irradiation with ionizing radiation is performed on one side or both sides of the film.

14. A method for manufacturing a microporous film in accordance with claim 10, wherein the surface treatment irradiation with ionizing radiation improves the hydrophilicity and/or mechanical properties of a film by irradiating the film with energized ion particles under a vacuum.

15. A method for manufacturing a microporous film in accordance with claim 10, wherein the surface treatment irradiation with ionizing radiation improves the hydrophilicity and/or mechanical properties of a film by the infusion of a reactive gas under a vacuum state by means of the irradiation of the film with energized ion particles.

16. A method for manufacturing a microporous film in accordance with claim 14 or claim 15, wherein one or more of ion particles are selected from a group consisting of electrons, hydrogen, oxygen, helium, fluorine, neon, argon, krypton, air, and N₂O.

17. A method for manufacturing a microporous film in accordance with claim 15, wherein one or more of reactive gases are selected from a group consisting of hydrogen, oxygen, nitrogen, ammonia, carbon monoxide, carbon dioxide, carbon tetrafluoride, methane, and N₂O.

18. A method for manufacturing a microporous film in accordance with claim 10, wherein the ionizing radiation is selected from a group consisting of ions, gamma (γ) rays, plasma, and electron beams.

19. A lithium ion secondary battery separator or alkali secondary battery separator comprising a microporous film manufactured in accordance with claim 10.

## Patentansprüche

1. Mikroporöse Folie, die durch ein Verfahren hergestellt wird, das die folgenden Schritte umfasst:
a) Formpressen einer Folie mit einem gemischten Blend, das zwei oder mehrere Polyolefine umfasst, unter Verwendung von Gießen oder Folienblasen,
b) Herstellen einer mikroporösen Folie durch Tempern und Verstrecken der geformten Folie, und
c) Behandeln der Oberfläche der Folie durch Bestrahlen mit ionisierender Strahlung entweder vor oder nach der Porenbildung.

2. Mikroporöse Folie gemäß Anspruch 1, wobei das gemischte Blend zwei oder mehrere Polyolefin-Mischungen umfasst, die eine Schmelzpunkt-Differenz von mehr als 10 °C haben.

3. Mikroporöse Folie gemäß Anspruch 1, wobei das gemischte Blend eine Mischung umfasst, in der Polypropylen mit einem hohen Schmelzpunkt und Polyethylen mit einem niedrigen Schmelzpunkt in einem Gewichtsverhältnis vermischt sind, das von 1:9 bis 9:1 reicht.

4. Mikroporöse Folie gemäß Anspruch 1, wobei die Oberflächenbehandlung durch Bestrahlung mit ionisierender Strahlung auf einer Seite oder auf beiden Seiten der Folie durchgeführt wird.

5. Mikroporöse Folie gemäß Anspruch 1, wobei die Oberflächenbehandlung durch Bestrahlung mit ionisierender Strahlung die Hydrophilie und/oder die mechanischen Eigenschaften der Folie verbessert, indem die Folie mit aktivierten (energiereichen) Ionenteilchen unter Vakuum bestrahlt wird.

6. Mikroporöse Folie gemäß Anspruch 1, wobei die Oberflächenbehandlung durch Bestrahlung mit ionisierender Strahlung die Hydrophilie und/oder die mechanischen Eigenschaften der Folie durch die Infusion eines reaktiven Gases unter einem Vakuumzustand mittels Einstrahlen von aktivierten Ionenteilchen auf die Folie verbessert.

7. Mikroporöse Folie gemäß den Ansprüchen 5 oder 6, wobei eines oder mehrere der Ionenteilchen aus der Gruppe ausgewählt sind, die aus Elektronen, Wasserstoff, Sauerstoff, Helium, Fluor, Neon, Argon, Krypton, Luft und N₂O besteht.

8. Mikroporöse Folie gemäß Anspruch 6, wobei eines oder mehrere der reaktiven Gase aus der Gruppe ausgewählt sind, die aus Wasserstoff, Sauerstoff, Stickstoff, Ammoniak, Kohlenmonoxid, Kohlendioxid, Tetrafluorkohlenstoff Methan und N₂O besteht.

9. Mikroporöse Folie gemäß Anspruch 1, wobei die ionisierende Strahlung aus der Gruppe ausgewählt ist, die aus Ionen, Gamma (γ)-Strahlen, Plasma und Elektronenstrahlen besteht.

10. Verfahren zur Herstellung einer mikroporösen Folie, die durch ein Verfahren hergestellt wird, das die folgenden Schritte umfasst:
a) Formpressen einer Folie mit einem gemischten Blend, das zwei oder mehrere Polyolefine enthält, unter Verwendung eines Extruders mit mittig gespreizter Breitschlitzdüse oder durch Folienblasen,
b) Herstellen einer mikroporösen Folie durch Tempern und Verstrecken der geformten Folie, und
c) Behandeln der Oberfläche der Folie durch Bestrahlung mit ionisierender Strahlung vor oder nach der Porenbildung.

11. Verfahren zur Herstellung einer mikroporösen Folie gemäß Anspruch 10, wobei das gemischte Blend zwei oder mehrere Polyolefin-Mischungen umfasst, die eine Schmelzpunkt-Differenz von mehr als 10 °C haben.

12. Verfahren zur Herstellung einer mikroporösen Folie gemäß Anspruch 10, wobei das gemischte Blend eine Mischung umfasst, in der Polypropylen mit einem hohen Schmelzpunkt und Polyethylen mit einem niedrigen Schmelzpunkt in einem Gewichtsverhältnis vermischt sind, das von 1:9 bis 9:1 reicht.

13. Verfahren zur Herstellung einer mikroporösen Folie gemäß Anspruch 10, wobei die Oberflächenbehandlung durch Bestrahlung mit ionisierender Strahlung auf einer Seite oder auf beiden Seiten der Folie durchgeführt wird.

14. Verfahren zur Herstellung einer mikroporösen Folie gemäß Anspruch 10, wobei die Oberflächenbehandlung durch Bestrahlung mit ionisierender Strahlung die Hydrophilie und/oder die mechanischen Eigenschaften der Folie verbessert, indem die Folie mit aktivierten Ionenteilchen unter Vakuum bestrahlt wird.

15. Verfahren zur Herstellung einer mikroporösen Folie gemäß Anspruch 10, wobei die Oberflächenbehandlung durch Bestrahlung mit ionisierender Strahlung die Hydrophilie und/oder die mechanischen Eigenschaften der Folie durch die Infusion eines reaktiven Gases unter einem Vakuumzustand mittels Einstrahlen von aktivierten Ionenteilchen auf die Folie verbessert.

16. Verfahren zur Herstellung einer mikroporösen Folie gemäß den Ansprüchen 14 oder 15, wobei eines oder mehrere der Ionenteilchen aus der Gruppe ausgewählt sind, die aus Elektronen, Wasserstoff, Sauerstoff, Helium, Fluor, Neon, Argon, Krypton, Luft und N₂O besteht.

17. Verfahren zur Herstellung einer mikroporösen Folie gemäß Anspruch 15, wobei eines oder mehrere der reaktiven Gase aus der Gruppe ausgewählt sind, die aus Wasserstoff, Sauerstoff, Stickstoff, Ammoniak, Kohlenmonoxid, Kohlendioxid, Tetrafluorkohlenstoff, Methan und N₂O besteht.

18. Verfahren zur Herstellung einer mikroporösen Folie gemäß Anspruch 10, wobei die ionisierende Strahlung aus der Gruppe ausgewählt ist, die aus Ionen, Gamma (γ)-Strahlen, Plasma und Elektronenstrahlen besteht.

19. Separator einer Lithiumionen-Sekundärbatterie oder Separator einer Alkali-Sekundärbatterie, der eine mikroporöse Folie umfasst, die gemäß Anspruch 10 hergestellt wird.

## Revendications

1. Film microporeux fabriqué par un procédé comprenant les étapes de :
a) moulage d'un film avec un mélange homogénéisé contenant deux polyoléfines ou plus en utilisant une coulée ou un soufflage de film ;
b) fabrication d'un film microporeux par recuit et étirage du film moulé ; et
c) traitement de la surface du film par irradiation avec un rayonnement ionisant avant ou après la formation des pores.

2. Film microporeux selon la revendication 1, dans lequel le mélange homogénéisé comprend deux polyoléfines ou plus possédant une différence de point de fusion de plus de 10°C.

3. Film microporeux selon la revendication 1, dans lequel le mélange homogénéisé comprend un mélange dans lequel du polypropylène possédant un point de fusion élevé et du polyéthylène possédant un point de fusion faible sont mélangés selon un rapport massique de 1:9 à 9:1.

4. Film microporeux selon la revendication 1, dans lequel le traitement de surface par irradiation avec un rayonnement ionisant est effectué sur un côté ou sur les deux côtés du film.

5. Film microporeux selon la revendication 1, dans lequel le traitement de surface par irradiation avec un rayonnement ionisant améliore le caractère hydrophile et/ou les propriétés mécaniques du film en irradiant des particules d'ions énergisés sur le film sous un vide.

6. Film microporeux selon la revendication 1, dans lequel le traitement de surface par irradiation avec un rayonnement ionisant améliore le caractère hydrophile et/ou les propriétés mécaniques du film grâce à l'infusion d'un gaz réactif dans un état de vide à l'aide d'irradiation de particules d'ions énergisés sur le film.

7. Film microporeux selon la revendication 5 ou la revendication 6, dans lequel une ou plusieurs des particules d'ions sont choisies parmi un groupe constitué d'électrons, d'hydrogène, d'oxygène, d'hélium, de fluor, de néon, d'argon, de krypton, d'air, et de N₂O.

8. Film microporeux selon la revendication 6, dans lequel un ou plusieurs gaz réactifs sont choisis parmi un groupe constitué d'hydrogène, d'oxygène, d'azote, d'ammoniaque, de monoxyde de carbone, de dioxyde de carbone, de tétrafluorure de carbone, de méthane, et de N₂O.

9. Film microporeux selon la revendication 1, dans lequel le rayonnement ionisant est choisi parmi un groupe constitué d'ions, de rayons gamma (γ), de plasma, et de faisceaux d'électrons.

10. Procédé de fabrication d'un film microporeux fabriqué par un procédé comprenant les étapes de :
a) moulage d'un film avec un mélange homogénéisé contenant deux polyoléfines ou plus en utilisant un extrudeur à filière en T ou un soufflage de film ;
b) fabrication d'un film microporeux par recuit et étirage du film moulé ; et
c) traitement de la surface du film par irradiation avec un rayonnement ionisant avant ou après la formation des pores.

11. Procédé de fabrication d'un film microporeux selon la revendication 10, dans lequel le mélange homogénéisé comprend des mélanges de deux polyoléfines ou plus possédant une différence de point de fusion de plus de 10°C.

12. Procédé de fabrication d'un film microporeux selon la revendication 10, dans lequel le mélange homogénéisé comprend un mélange dans lequel du polypropylène possédant un point de fusion élevé et du polyéthylène possédant un point de fusion faible sont mélangés selon un rapport massique de 1:9 à 9:1.

13. Procédé de fabrication d'un film microporeux selon la revendication 10, dans lequel le traitement de surface par irradiation avec un rayonnement ionisant est effectué sur un côté ou sur les deux côtés du film.

14. Procédé de fabrication d'un film microporeux selon la revendication 10, dans lequel le traitement de surface par irradiation avec un rayonnement ionisant améliore le caractère hydrophile et/ou les propriétés mécaniques d'un film en irradiant le film avec des particules d'ions énergisés sous un vide.

15. Procédé de fabrication d'un film microporeux selon la revendication 10, dans lequel le traitement de surface par irradiation avec un rayonnement ionisant améliore le caractère hydrophile et/ou les propriétés mécaniques d'un film grâce à l'infusion d'un gaz réactif dans un état de vide à l'aide d'irradiation du film avec des particules d'ions énergisés.

16. Procédé de fabrication d'un film microporeux selon la revendication 14 ou la revendication 15, dans lequel une ou plusieurs particules d'ions sont choisies parmi un groupe constitué d'électrons, d'hydrogène, d'oxygène, d'hélium, de fluor, de néon, d'argon, de krypton, d'air, et de N₂O.

17. Procédé de fabrication d'un film microporeux selon la revendication 15, dans lequel un ou plusieurs gaz réactifs sont choisis parmi un groupe constitué d'hydrogène, d'oxygène, d'azote, d'ammoniaque, de monoxyde de carbone, de dioxyde de carbone, de tétrafluorure de carbone, de méthane, et de N₂O.

18. Procédé de fabrication d'un film poreux selon la revendication 10, dans lequel le rayonnement ionisant est choisi parmi un groupe constitué d'ions, de rayons gamma (γ), de plasma, et de faisceaux d'électrons.

19. Isolateur pour accumulateur secondaire à ion lithium ou isolateur pour accumulateur secondaire alcalin comprenant un film microporeux fabriqué selon la revendication 10.
